# EUROPEAN PATENT APPLICATION

(11) **EP 0 570 095 A2**
(43) Date of publication of application: **18.11.1993**
(21) Application number: 93301735.2
(22) Date of filing: 08.03.1993
(51) Int. Cl.: B23B 19/02, B23Q 1/08

(54) **Tool spindles**

(30) Priority: 13.05.1992 GB 9210231
(71) Applicant: SYSTEMATIC DRILL HEAD COMPANY LIMITED, Coventry, Warwickshire CV3 2AS (GB)
(72) Inventor: Stevens, Peter John, Coventry, Warwickshire CV5 7HG (GB)
(74) Representative: Hands, Horace Geoffrey

(57) **Abstract**

A machine tool spindle (10) has a seal to prevent leakage of bearing lubricant towards the operative end of the spindle and also to prevent cutting lubricant (suds) flowing in the opposite direction towards the bearings. The seal includes one or more flingers (16) which are radial flanges rotating with the spindle (10) and located in annular collection chambers, so as to throw off leakage fluid which reaches them. Air purge systems (56) are used to expel collected liquid from the chambers to drain passages.

## Description

This invention relates to machine tool spindles for example drill spindles.

In order to improve the accuracy of machining by such spindles, it is desirable to locate the bearings with the spindles as close to the cutting face as possible. This creates the risk that cutting fluid, for example suds, may get into the bearings and it is conventional to use wiper seals otherwise known as lip seals to prevent this. The lubrication system for the bearings themselves is usually a different oil pumped from a sump and allowed to return to the sump. The seal is effective to separate bearing lubricant from cutting lubricant.

In the past, satisfactory designs of spindles have existed which met the requirements of the time. But the increasing use of light alloys (aluminium alloys) for I.C. engine components, which can be machined at substantially higher cutting speeds, for example spindle speeds typically five times faster than those used for machining cast iron, together with demands for greater accuracy in the machining operation carried out by the spindle driven tool, brings about a new set of problems.

In the interests of accuracy in machining, it is now recognised to be desirable to control the temperature of the tool spindle within close limits: in practice this means to limit temperature rise. Limits as close as 15 deg.F are suggested.

The applicants have identified that the seals contribute to temperature rise as a result of friction particularly at higher spindle speeds, and have also identified that lubrication oil contributes to temperature rise as a result of continuous recirculation and pumping (churning) of the oil.

The objects of the invention are to provide new designs which reduce temperature rise.

In accordance with a first aspect of the invention, a machine tool spindle comprises bearings supporting the spindle and a seal assembly located between the bearings and a cutting tool end of the spindle, in which the seal is labyrinthine with relatively rotating parts disposed with clearances between them so that no part rubs on another part.

Preferably the seal comprises at least one flinger in the form of a radial projection formed or provided on the spindle and located in a corresponding collection chamber, so that liquid finding its way along the spindle may flow radially outwardly on the flinger under centrifugal force and be collected in the chamber for subsequent disposal. Preferably flingers are provided at least at opposite ends of the seal assembly.

Preferably at least one air purge system is used in which pressurised air is fed to a clearance and allowed to bleed towards the source of the liquid which is to be excluded. Two air purge systems may be used at differential pressures.

According to another aspect of the invention a machine tool spindle comprises bearings supporting the spindle and fed with metered lubricant on a total loss basis without recycling.

Preferably both aspects are combined in any one design.

One presently preferred embodiment of the invention will now be more particularly described with reference to the accompanying drawings in which:-
Figure 1 is a diagrammatic sectional elevation of the cutter end of a spindle showing seal details;
Figure 2 is a sectional end view of the same;
Figure 3 is an end view showing a drive train therefor; and
Figure 4 is an elevation of the other end of the spindle.

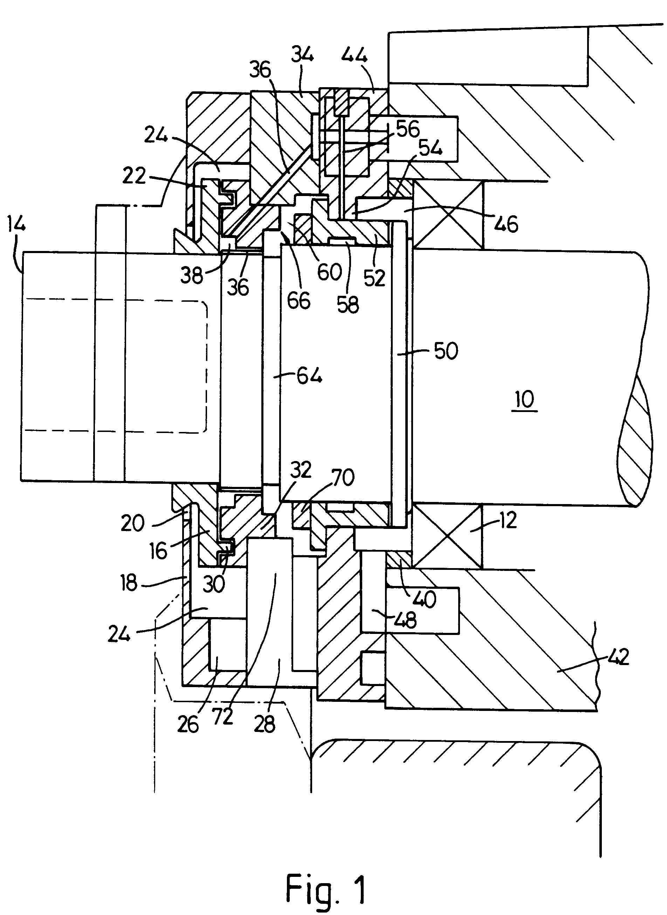

Referring first to Figure 1, the spindle 10 is supported by a series of spaced directional ball or roller bearings which journal the spindle and control its axial position including the set 12.

End 14 of the spindle is exposed to splashing with cutting lubricant (suds) in copious flow. This is firstly prevented from travel along the spindle by a first flinger 16 which may be made of nylon or like resilient and flexible material which is unaffected by the suds, and which can be a press fit on the spindle and remain in press fitted position fast with the spindle both axially and angularly. The flinger has a frusto-conical portion with its major dimension towards the cutter and extending axially beyond (nearer the cutter than) the outer face of a cover plate 18.

The cover plate 18 may be annular (in the illustrated embodiment it is basically rectangular with a eccentric hole) with a clearance 20 between its inner perimeter and the frusto-conical face of flinger 16. When the flinger rotates with the spindle, suds are flung off centrifugally from the major dimension end of the frusto cone and any which finds its way through the clearance 20 tends to be thrown out.

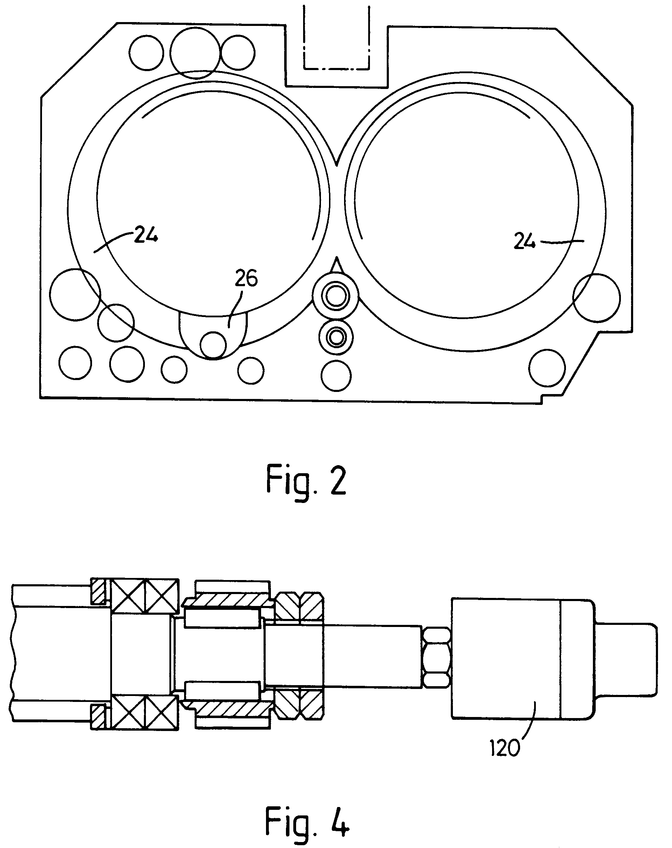

The flinger 16 is integral with an annular flange 22. The cover plate 18 in this illustrated embodiment is interiorly eccentric (the eccentricity serving to provide a large volume whilst maintaining small clearances at the upper part: this may be peculiar to this specified design) so as to create a first collection chamber 24 about the flange, and the eccentricity of this is best seen in Figure 2. The flange 22 is located in that chamber.

The chamber 24 opens to a sump 26 leading to an exhaust passage through 28, so that any liquid that finds its way into the chamber and escapes being flung out of the chamber by the frusto-conical portion may be centrifugally thrown in the chamber by the disc and drain to the sump and exhaust.

The rear face of disc 16 may have a concentric rib 30 lying in a channel in an adjacent stationary component 32. Alternatively, the rib and channel may be replaced by a scroll, that is a fin which spirals outwardly about the spindle axis in a direction relative to spindle rotational direction which causes any liquid reaching the scroll to be urged outwardly by the applied forces in rotation of the spindle for discharge into the chamber 24 from this rear face of the disc. The scroll, if used, will lie within a wider channel appropriate to the dimensions of the scroll.

The stationary insert 32 is located and held in position by a second cover part 34, which like cover 24 is also a stationary part. Insert 32 is preferably of a low friction material for example bronze in case of unintentional contact between it and the spindle or other rotating part, but has a fine annular clearance 36 between the cylindrical bore of the insert at its inner perimeter and the spindle surface. The spindle surface at this point has a lefthand return screw thread. There is a like fine clearance between the face adjacent the flinger and its rib/scroll, and its outer periphery forms the radially inner wall of the chamber 24.

The stationary second cover 34 and the stationary insert 32 are bored at a number of positions to provide purge flow passages 36 leading to a first annular purge chamber 38 which is defined between the insert 32 and the spindle 10. Air fed into that purge chamber bleeds out via the clearance between the disc and insert and carries with it any suds which have reached these areas.

Bearing 12 is exposed to drip fed lubricant at measured rate. The bearing assembly is axially located by a spacer ring 40 fitted in a main bore of the main housing and which in turn is abutted by a third stationary cover component 44. A second collection chamber 46 is defined in part between the bearing 10, spacer 40, and cover 44, all of which are stationary parts, and that chamber 46 opens to a drain passage 48 at the lowermost point: this chamber extends concentrically at the spindle.

The spindle is provided with a further flinger 50 as an integral radial flange located close to the bearing assembly. It acts centrifugally especially on bearing lubricant creeping along the spindle from the bearing, to throw the lubricant to the outer wall of the second chamber for drainage.

A second stationary insert 52, again preferably of bronze, extends from close to the second flinger 50 towards the first insert 32 and is held by flange 54 of the third cover. A third flinger 70 which like the first flinger 16 may be a plastics moulding press fitted on the spindle is located close to the second insert and forms a boundary of the central clearance 60.

A second air purge system comprising passage 56 carries air to a second annular purge chamber 58 defined in part by the spindle surface and lying within the second insert 52. The air pressure used by the second purge system is preferably slightly higher than in the passage 36, so that the higher pressure air bleeds in both axial directions. In one, it rejects suds flow via fine clearance 36 and the major clearance 60 and in the other rejects oil as the air flows to collection chamber 46.

Both purge systems may be fed with air from a common source, via a pressure reducing system in the one case, and the air may be supplied via the main housing which is thus also pressurised.

To summarise, oil flow from the bearings along the spindle in the direction generally from right to left in the drawing is prevented by the second flinger 50 and the second air purge system. Oil flow at more radially outer points may be prevented by close fit and sealing between parts which are not rotatable relative to one another, for example the second insert 54 and the third cover 44. Any oil which does escape these measures would reach the central clearance 60.

Suds flow from the cutting tool along the spindle in the direction generally from left to right in the drawing is prevented by the first flinger 16, the rib or scroll labyrinth 30, the first air purge system and the lefthand screw return thread. Any suds which does escape these means would also reach the central clearance 60.

The said central clearance or chamber 60 includes a peripheral groove 64 in the spindle surface, and stepped faces with squared corners 66 on the insert 32, and likewise on the third flinger 70. These all cooperate to throw any suds and lubricant which reaches this area 60 to the radially outer wall, which is defined by the second cover, for drain and discharge through passage 72.

In a multi-spindle tool, the chambers 24 for the various spindles may merge as will be seen from Figure 2 which illustrates a two spindle arrangement.

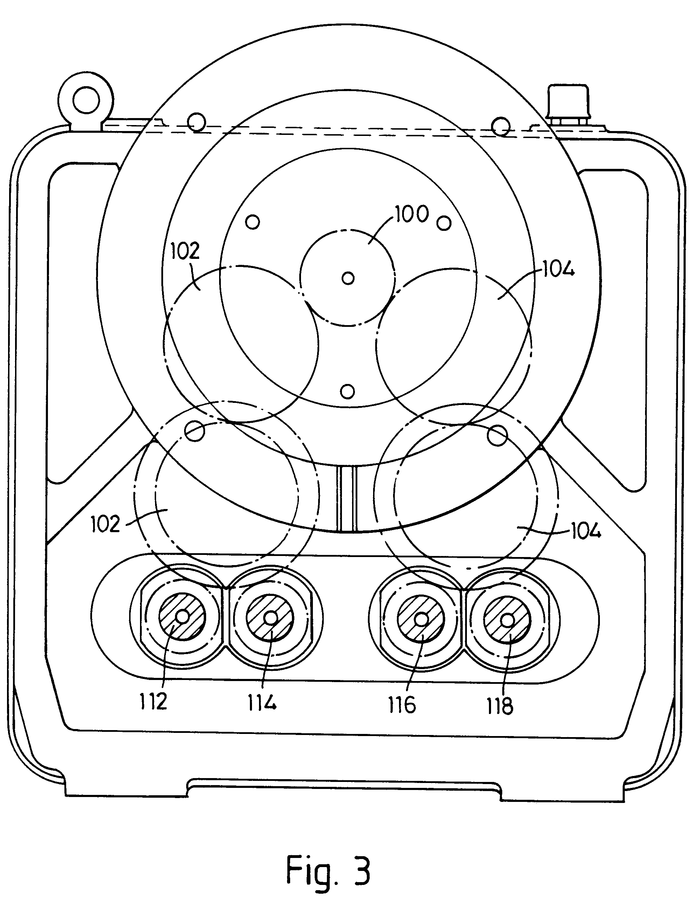

Figure 3 shows the drive train from a common source shaft 100 via a pair of parallel idler trains 102, 104 each leading to a pair of spindles 112 114 and 116 118, and each of those spindles may be arranged with bearing sets and axial position control as shown in Figure 4 and with the seal assembly of Figure 1.

## Claims

1. A machine tool spindle comprises bearings supporting the spindle and a seal assembly located between the bearings and a cutting tool end of the spindle, in which the seal is labyrinthine with relatively rotating parts disposed with clearances between them so that no part rubs on another part.

2. A spindle as claimed in Claim 1 wherein the seal comprises at least one flinger in the form of a radial projection formed or provided on the spindle and located in a corresponding collection chamber, so that liquid finding its way along the rotating spindle may flow radially outwardly on the flinger under centrifugal force and be collected in the chamber for subsequent disposal.

3. A spindle as claimed in Claim 2 wherein flingers are provided at least at opposite ends of the seal assembly.

4. A spindle as claimed in any of Claims 1 to 3 wherein at least one air purge system is used in which pressurised air is fed to a clearance and allowed to bleed towards the source of the liquid which is to be excluded.

5. A spindle as claimed in Claim 4 wherein two air purge systems are used, at differential pressures.

6. A spindle as claimed in any preceding claim wherein means are provided for feeding said bearings with metered lubricant on a total loss basis without recycling.

7. A machine tool spindle assembly substantially as described with reference to Figure 1 of the accompanying drawings.
